# EUROPEAN PATENT SPECIFICATION

(11) **EP 4 120 409 B1**
(45) Date of publication and mention of the grant of the patent: **08.04.2026**
(21) Application number: 21768916.5
(22) Date of filing: 19.01.2021
(51) Int. Cl.: H01M 10/05

(54) **BATTERY PACK**
BATTERIEPACK
BLOC-BATTERIE

(30) Priority: 12.03.2020 JP 2020042867
(43) Date of publication of application: 18.01.2023
(73) Proprietor: SANYO Electric Co., Ltd., Daito-shi Osaka 574-8534 (JP)
(72) Inventor: OGISHIMA, Yuji, Osaka-shi, Osaka 540-6207 (JP); YOSHIDA, Takeshi, Osaka-shi, Osaka 540-6207 (JP); FUJIHARA, Toyoki, Osaka-shi, Osaka 540-6207 (JP); MINAMI, Keisuke, Osaka-shi, Osaka 540-6207 (JP)
(74) Representative: Novagraaf International SA
(86) International application number: PCT/JP2021/001688
(87) International publication number: WO 2021/181894

(56) References cited:
- WO-A1-2015/097875
- WO-A1-2017/126285
- CN-A- 108 735 937
- JP-A- 2009 301 969
- JP-A- 2015 207 539
- JP-A- 2018 156 838

## Description

### TECHNICAL FIELD

The present disclosure relates to a battery pack configured such that a plurality of rectangular secondary batteries is arranged.

### BACKGROUND ART

In a battery pack including a plurality of rectangular secondary batteries, the rectangular secondary batteries and plate-shaped spacers are alternately arranged, and the rectangular secondary batteries are tightened with, e.g., a cable tie. Thus, the plate-shaped spacers equally apply a load to the entirety of side surfaces of a battery case. As a result, the entirety of an electrode body housed in the battery case is also equally pressed.

In association with charging and discharging of the battery, the electrode body expands and contracts. The electrode body expands and contracts about a winding axis, and expansion and contraction are great particularly at a center portion in a winding axis direction. Thus, a surface pressure at the center portion of the electrode body in the winding axis direction increases, and a surface pressure at an end portion of the electrode body in the winding axis direction decreases. As a result, an electrolytic solution in the electrode body is pushed from the center portion to the end portion in the winding axis direction, leading to a problem that battery high-rate properties are degraded due to leakage of the electrolytic solution to the outside of the electrode body.

For solving such a problem, Patent Document 1 discloses a battery pack configured such that a pair of spacers is, between adjacent ones of rectangular secondary batteries, interposed at both end portions of a side surface, which faces an electrode body, of a battery case in an electrode body winding axis direction. With this configuration, both end portions of the electrode body in the winding axis direction are pressed by the pair of spacers, and therefore, leakage of the electrolytic solution to the outside of the electrode body due to charging and discharging can be reduced.

### CITATION LIST

### PATENT DOCUMENT

PATENT DOCUMENT 1: Japanese Unexamined Patent Publication No. 2012-230837. PATENT DOCUMENT 2: CN 108 735 937 A (TOYOTA MOTOR CO LTD) 2 November 2018 (2018-11-02)

### SUMMARY OF THE INVENTION

The center portion, at which expansion and contraction are great, of the electrode body in the winding axis direction is not pressed only by pressing of both end portions of the electrode body in the winding axis direction. For this reason, the amount of expansion and contraction of the electrode body due to high-rate charging and discharging is great, and the amount of electrolytic solution pushed from the center portion to the end portion of the electrode body is great. Thus, leakage of the electrolytic solution to the outside of the electrode body cannot be sufficiently reduced. As a result, degradation of the high-rate properties cannot be sufficiently reduced only by the technique disclosed in Patent Document 1.

A battery pack according to the present disclosure is a battery pack including a plurality of rectangular secondary batteries arranged in a state in which the plurality of rectangular secondary batteries is pressed against each other in a thickness direction through a spacer. Each rectangular secondary battery is configured such that a flat electrode body including positive and negative electrode plates wound with a separator interposed therebetween is housed in a rectangular battery case with a winding axis of the electrode body extending parallel with a long side surface of the battery case. The electrode body has a flat portion in which a positive electrode material mixture layer and a negative electrode material mixture layer face each other with the separator interposed therebetween. The spacer includes a pair of first pressing portions pressing both end portions of the long side surface, which faces the flat portion, of the battery case in a winding axis direction along a direction perpendicular to the winding axis, and a second pressing portion pressing a portion of the long side surface along the winding axis between the pair of first pressing portions.

According to the present disclosure, the battery pack configured such that degradation of the high-rate properties is reduced can be provided.

### BRIEF DESCRIPTION OF THE DRAWINGS

[FIG. 1] FIG. 1 is views schematically showing a configuration of a rectangular secondary battery in one embodiment of the present disclosure, FIG. 1(a) is a top view, FIG. 1(b) is a sectional view along an Ib-Ib line of FIG. 1(a), FIG. 1(c) is a sectional view along an Ic-Ic line of FIG. 1(b), and FIG. 1(d) is a sectional view along an Id-Id line of FIG. 1(b).
[FIG. 2] FIG. 2 is a side view showing a configuration of an electrode body in the present embodiment.
[FIG. 3] FIG. 3 is a perspective view schematically showing a configuration of a battery pack in the present embodiment.
[FIG. 4A] FIG. 4A is a view showing a typical spacer configuration.
[FIG. 4B] FIG. 4B is a view showing a studied spacer configuration.
[FIG. 4C] FIG. 4C is a view showing a spacer configuration in the present embodiment.
[FIG. 5A] FIG. 5A is a sectional view showing a state in which a long side surface of a battery case is pressed by the spacers.
[FIG. 5B] FIG. 5B is a sectional view showing the state in which the long side surface of the battery case is pressed by the spacers.
[FIG. 5C] FIG. 5C is a sectional view showing the state in which the long side surface of the battery case is pressed by the spacers.
[FIG. 5D] FIG. 5D is a sectional view showing the state in which the long side surface of the battery case is pressed by the spacers.
[FIG. 6] FIG. 6 is a side view showing another embodiment of the spacers.
[FIG. 7] FIG. 7 is a side view showing still another embodiment of the spacers.
[FIG. 8A] FIG. 8A is a side view showing a variation of the spacers.
[FIG. 8B] FIG. 8B is a side view showing another variation of the spacers.
[FIG. 8C] FIG. 8C is a side view showing still another variation of the spacers.

### DESCRIPTION OF EMBODIMENTS

Hereinafter, an embodiment of the present invention will be described with reference to the drawings. Note that the present invention is not limited to the embodiment below. Moreover, changes can be made as necessary without departing from a scope in which advantageous effects of the present invention are produced.

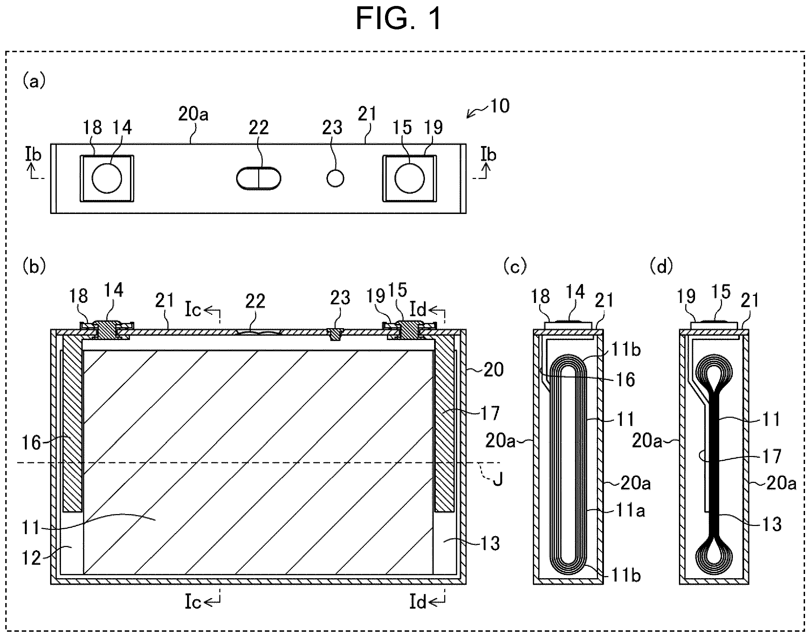

FIG. 1 is views schematically showing a configuration of a rectangular secondary battery in one embodiment of the present disclosure. FIG. 1(a) is a top view, FIG. 1(b) is a sectional view along an Ib-Ib line of FIG. 1(a), FIG. 1(c) is a sectional view along an Ic-Ic line of FIG. 1(b), and FIG. 1(d) is a sectional view along an Id-Id line of FIG. 1(b). The rectangular secondary battery in the present embodiment is a battery using a "nonaqueous" electrolyte, such as an organic electrolyte or an organic solvent, and the type of rectangular secondary battery is not particularly limited. Representative examples of the nonaqueous electrolyte secondary battery include a lithium ion secondary battery.

As shown in FIGS. 1(a) to 1(d), a rectangular secondary battery 10 in the present embodiment includes an electrode body 11, a rectangular battery case 20 housing the electrode body 11, and a sealing plate 21 sealing an opening of the battery case 20. The electrode body 11 forms a flat structure in which a positive electrode plate and a negative electrode plate are wound with a separator interposed therebetween. The electrode body 11 is housed in the battery case 20 such that a winding axis J of the electrode body 11 is parallel with a long side surface 20a of the battery case 20.

At both end portions of the electrode body 11 in a winding axis J direction, ends 12, 13 of the positive and negative electrode plates are, through current collectors 16, 17. each connected to positive and negative electrode terminals 14, 15 fixed to the sealing plate 21. The ends 12, 13 of the positive and negative electrode plates are regions (a positive electrode core and a negative electrode core) where positive and negative electrode material mixture layers are not formed.

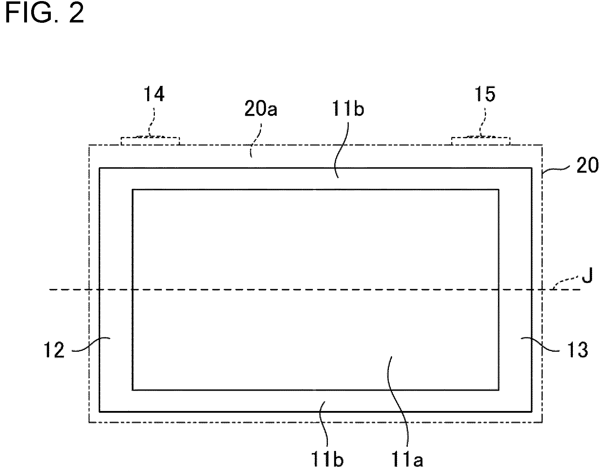

As shown in FIG. 2, the electrode body 11 has a flat portion 11a formed parallel with the long side surface 20a of the battery case 20 and formed such that the positive and negative electrode material mixture layers face each other with the separator interposed therebetween. Further, the electrode body 11 has curved portions 11b at both end portions in a direction perpendicular to the winding axis J.

The positive electrode terminal 14 and the negative electrode terminal 15 are fixed to the sealing plate 21 through insulating plates 18, 19. The sealing plate 21 is provided with a gas discharge valve 22 that releases gas from the battery when the internal pressure of the battery case 20 increases to a predetermined value or greater. The sealing plate 21 is provided with a solution injection hole (not shown), and the solution injection hole is sealed with a plug 23 after an electrolytic solution has been injected into the battery case 20 through the solution injection hole.

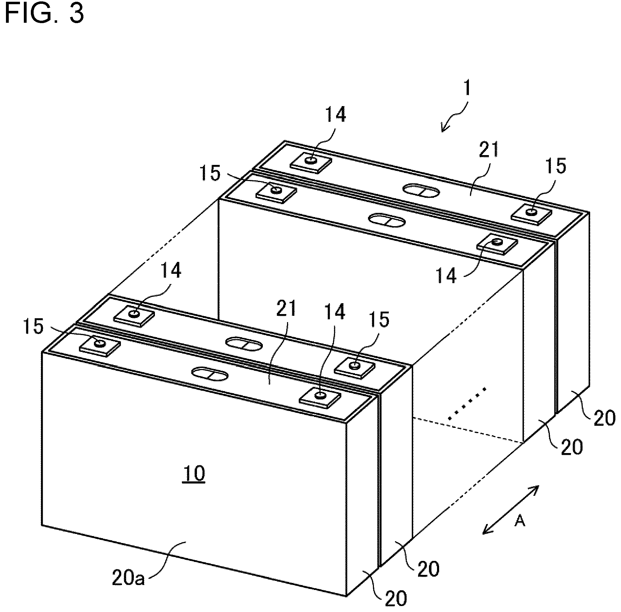

FIG. 3 is a perspective view schematically showing a configuration of a battery pack 1 in the present embodiment.

As shown in FIG. 3, the battery pack 1 is configured such that a plurality of rectangular secondary batteries 10 in the shape shown in FIG. 1 is, through spacers (not shown), arranged pressed against each other in an arrangement direction A. The plurality of rectangular secondary batteries 10 is tightened with, e.g., a cable tie (not shown).

As described above, there is a probability that due to expansion and contraction of the electrode body 11 in association with charging and discharging of the rectangular secondary battery 10, the electrolytic solution in the electrode body 11 moves from a center portion to the end portion and leaks to the outside of the electrode body 11.

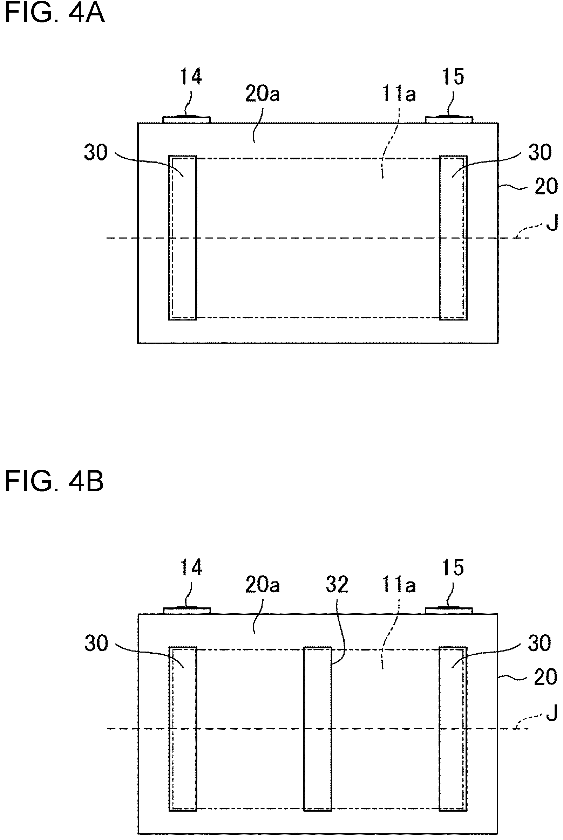

FIG. 4A is a view showing a spacer configuration disclosed in Patent Document 1. As shown in FIG. 4A, spacers include a pair of pressing portions (first pressing portions) 30 pressing portions of the long side surface 20a, which faces the flat portion 11a of the electrode body 11, of the battery case 20 along the direction perpendicular to the winding axis J on both end sides in the winding axis J direction. With this configuration, both end portions of the electrode body 11 are pressed by the pair of first pressing portions 30, and therefore, leakage of the electrolytic solution to the outside of the electrode body due to charging and discharging can be reduced.

However, as described above, since only both end portions of the electrode body 11 in the winding axis direction are pressed and the center portion, at which expansion and contraction are great, of the electrode body 11 in the winding axis direction is not pressed, the amount of expansion and contraction of the electrode body 11 due to high-rate charging and discharging is great, and the amount of electrolytic solution pushed from the center portion to the end portion of the electrode body is great. For this reason, leakage of the electrolytic solution to the outside of the electrode body 11 cannot be sufficiently reduced. Thus, degradation of high-rate properties cannot be sufficiently reduced only with the spacer configuration shown in FIG. 4A.

For these reasons, the present inventor et al. have conducted study on pressing of the center portion, at which expansion and contraction are great, of the electrode body 11 by other pressing portions for reducing degradation of the high-rate properties due to depletion of the electrolytic solution in the electrode body 11. The present inventor et al. have conducted study on employment of pressing portions in shapes shown in FIGS. 4B and 4B as the pressing portions.

A pressing portion (a third pressing portion) 32 shown in FIG. 4B presses a portion of the long side surface 20a, which faces the flat portion 11a of the electrode body 11, of the battery case 20 along the direction perpendicular to the winding axis J in the middle between the pair of first pressing portions 30.

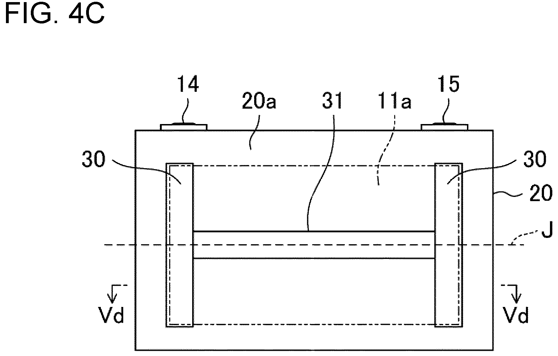

A pressing portion (a second pressing portion) 31 shown in FIG. 4C presses a portion of the long side surface 20a, which faces the flat portion 11a of the electrode body 11, of the battery case 20 along the winding axis J between the pair of first pressing portions 30.

Battery packs were produced using the spacers configured as shown in FIGS. 4A to 4C, and a cycle test was conducted by the following method to evaluate the high-rate properties.

### (Production of Rectangular Secondary Battery)

The rectangular secondary battery (the lithium ion secondary battery) having the structure shown in FIG. 1 was produced in the following steps.

The positive electrode material mixture layers including a positive electrode active material made of lithium-nickel-cobalt-manganese composite oxide were formed on both surfaces of the positive electrode core made of aluminum foil, and in this manner, the band-shaped positive electrode plate was produced. The negative electrode material mixture layers including a negative electrode active material made of graphite were formed on both surfaces of the negative electrode core made of copper foil, and in this manner, the band-shaped negative electrode plate was produced. The produced band-shaped positive and negative electrode plates were wound with the polyolefin separator interposed therebetween, and was pressed with a predetermined pressure. In this manner, the flat electrode body 11 was produced. One example of the pressure is equal to or greater than 50 kN and equal to or less than 150 kN, and more preferably equal to or greater than 100 kN and equal to or less than 120 kN.

For the above-described positive electrode core, metal foil safe within a positive electrode potential range in a battery operating voltage range, such as aluminum or aluminum alloy, can be used. The thickness of the positive electrode core is, for example, equal to or greater than 5 µm and equal to or less than 20 µm. The positive electrode material mixture layer includes the positive electrode active material, a conductive material, and a binder. The thickness of the positive electrode material mixture layer is, on one surface side of the positive electrode core, equal to or greater than 15 µm and equal to or less than 80 µm, and preferably equal to or greater than 20 µm and equal to or less than 50 µm, for example.

The positive electrode active material includes, as a main component, lithium-containing transition metal composite oxide. Metal elements contained in the lithium-containing transition metal composite oxide include Ni, Co, Mn, Al, B, Mg, Ti, V, Cr, Fe, Cu, Zn, Ga, Sr, Zr, Nb, In, Sn, Ta, W, etc. A preferable example of the lithium-containing transition metal composite oxide is composite oxide containing at least one selected from a group consisting of Ni, Co, and Mn. Note that particles of an inorganic compound such as aluminum oxide or a lanthanoid-containing compound may be fixed to surfaces of particles of the lithium-containing transition metal composite oxide.

The conductive material included in the positive electrode material mixture layer may include, for example, carbon materials such as carbon black, acetylene black, ketjen black, graphite, a carbon nanotube, and a carbon fiber. The binder included in the positive electrode material mixture layer may include, for example, fluorine resin such as polytetrafluoroethylene (PTFE) and polyvinylidene fluoride (PVdF), polyacrylonitrile (PAN), polyimide, acrylic resin, and polyolefin. Such resin may be used in combination with carboxymethylcellulose (CMC) or a cellulose derivative thereof, such as salt thereof, or polyethylene oxide (PEO).

For the above-described negative electrode core, metal foil safe within a negative electrode potential range in the battery operating voltage range, such as copper or copper alloy, can be used. The thickness of the negative electrode core is, for example, equal to or greater than 5 µm and equal to or less than 20 µm. The negative electrode material mixture layer includes the negative electrode active material and a binder. The thickness of the negative electrode material mixture layer is, on one surface side of the negative electrode core, equal to or greater than 20 µm and equal to or less than 80 µm, and preferably equal to or greater than 30 µm and equal to or less than 60 µm, for example.

The negative electrode material mixture layer includes, as the negative electrode active material, a carbon-based active material reversibly absorbing/desorbing lithium ions, for example. The carbon-based material preferably includes, for example, graphite such as natural graphite such as flaky graphite, bulky graphite, and earthy graphite and artificial graphite such as bulky artificial graphite and graphitized mesophase carbon microbeads (MCMB). For the negative electrode active material, a Si-based active material including at least one of Si or a Si-containing compound may be used, and the carbon-based active material and the Si-based active material may be used in combination.

As in the case of the positive electrode, the binder included in the negative electrode material mixture layer may include, for example, fluorine-containing resin such as PTFE and PVdF, PAN, polyimide, acrylic resin, and polyolefin, but styrene-butadiene rubber (SBR) is preferably used. Further, the negative electrode material mixture layer may include CMC or salt thereof, polyacrylic acid (PAA) or salt thereof, or PVA. CMC or salt thereof functions as a thickener for adjusting a negative electrode material mixture slurry to a proper viscosity range, and also functions as a binder as in SBR.

Considering not only battery performance etc. but also an electrolytic solution movement amount and an electrolytic solution retention capacity, a preferable example of the negative electrode material mixture layer includes a negative electrode active material having a volume-based median diameter of equal to or greater than 8 µm and equal to or less than 12 µm, SBR, and CMC or salt thereof. The volume-based median diameter is such a particle size that a cumulative volume value is 50% in particle size distribution measured by a laser diffraction scattering method, and is also called a 50% particle size (D50) or a median size. A negative electrode material mixture layer packing density is determined mainly by a negative electrode active material packing density, and The D50, particle size distribution, shape, etc. of the negative electrode active material greatly influence the negative electrode material mixture layer packing density. Each of the contents of SBR and CMC or salt thereof is, with respect to the mass of the negative electrode material mixture layer, preferably equal to or greater than 0.1% by mass and equal to or less than 5% by mass, and more preferably equal to or greater than 0.5% by mass and equal to or less than 3% by mass.

The negative electrode material mixture layer packing density is not particularly limited, but is preferably equal to or greater than 0.9 mg/cm³ and preferably 2.0 mg/cm³, considering not only the battery performance etc. but also the electrolytic solution movement amount and the electrolytic solution retention capacity. For example, the negative electrode material mixture layer packing density is equal to or greater than 1.0 mg/cm³ and equal to or less than 1.4 mg/cm³, and more preferably equal to or greater than 1.10 mg/cm³ and equal to or less than 1.30 mg/cm³.

For the separator, a porous sheet having ionic permeability and insulation is used. The separator (the porous sheet) includes, for example, a porous base material including, as a main component, at least one selected from a group consisting of polyolefin, polyvinylidene fluoride, polytetrafluoroethylene, polyimide, polyamide, polyamide imide, polyethersulfone, polyetherimide, and aramid. Among these materials, polyolefin is preferable, and polyethylene and polypropylene are particularly preferable.

The separator may be made only of the resin porous base material, or may have such a multilayer structure that, e.g., a heat-resistant layer including inorganic particles etc. is formed at least on one surface of the porous base material. The resin porous base material may have a multilayer structure of, e.g., polypropylene/polyethylene/polypropylene. The thickness of the separator is, for example, equal to or greater than 10 µm and equal to or less than 30 µm. The separator has, for example, an average particle size of equal to or greater than 0.02 µm and equal to or less than 5 µm and a porosity of equal to or greater than 30% and equal to or less than 70%. Generally, an electrode body includes two separators, and the same separator can be used for these two separators.

It was assumed that the width (the length in the winding axis J direction) of the electrode body 11 is 116.3 mm, the height (the length in the direction perpendicular to the winding axis J) of the electrode body 11 is 57.6 mm, and the thickness of the electrode body 11 is 10.5mm. Moreover, it was assumed that the width of the flat portion 11a in which the positive electrode material mixture layer and the negative electrode material mixture layer face each other with the separator interposed therebetween is 90 mm and the height of the flat portion 11a is 50 mm.

The produced electrode body 11 was housed in the aluminum battery case 20, and thereafter, the opening of the battery case 20 was sealed with the sealing plate 21. The electrolytic solution was injected into the battery case 20 through the solution injection hole, and thereafter, the solution injection hole was sealed with the plug. In this manner, the rectangular secondary battery 10 was produced. The capacity of the produced rectangular secondary battery 10 was 5.0 Ah.

For insulation from the battery case, the electrode body is housed in the battery case in a state in which the electrode body is covered with an insulating sheet (not shown). A film may be bonded to an entire inner surface of the battery case or the entire inner surface of the battery case may be coated with resin such that the insulation of the battery case is ensured.

The battery case may only be required to be made of metal, be easily moldable, and have stiffness, but is preferably made of aluminum or aluminum alloy. The dimensions are not particularly limited, but as one example, a length in a lateral direction is equal to or greater than 120 mm and equal to or less than 140 mm, a height is equal to or greater than 60 mm and equal to or less than 70 mm, and a thickness is equal to or greater than 11 mm and equal to or less than 14 mm. The thickness of the surface of the can facing the flat portion of the body with the wound electrodes is preferably equal to or greater than 0.3 mm and equal to or less than 1.5 mm, more preferably equal to or greater than 0.4 mm and equal to or less than 1.1 mm, and much more preferably equal to or greater than 0.5 mm and equal to or less than 0.7 mm. If the thickness is less than 0.3 mm, a strength is insufficient, and there is a probability that the sealability of the can cannot sufficiently be ensured against scratches of the battery case. If the thickness is greater than 1.5 mm, the stiffness is high, and for this reason, there is a probability that an intended pressure is not on the electrode body even when the battery case is pressed with the spacers from the outside.

It was assumed that the width of the battery case 20 is 120 mm, the height of the battery case 20 is 65 mm, and the thickness of the battery case 20 is 12.6 mm. The thickness of the long side surface 20a of the battery case 20 facing the flat portion 11a of the electrode body 11 was 0.6 mm. An electrolytic solution including LiPF₆ as an electrolyte and having a concentration of 1.3 mol/L and a viscosity of 4.0 mPa/s was injected in an amount of 36 g.

The electrolytic solution preferably includes a nonaqueous solvent and electrolytic salt dissolved in the nonaqueous solvent, considering ionic conductivity. For the nonaqueous solvent, esters, ethers, nitriles, amides, or a solvent mixture of two or more types of these components may be used, for example. The nonaqueous solvent may contain a halogen substitute obtained in such a manner that at least part of hydrogen of such a solvent is substituted with a halogen atom such as fluorine.

The viscosity of the nonaqueous electrolytic solution at 25°C is equal to or greater than 2.0 mPa·s, preferably equal to or greater than 6.0 mPa·s, more preferably equal to or greater than 3.0 mPa·s and equal to or less than 5.0 mPa·s, and much more preferably equal to or greater than 3.5 mPa·s and equal to or less than 4.5 mPa·s. In the case of less than 2.0 mPa·s, the electrolytic solution movement amount due to charging and discharging is great, and there is a probability that leakage of the electrolytic solution to the outside of the electrode body cannot be sufficiently reduced. In the case of greater than 6.0 mPa·s, there is a probability that the ionic conductivity is degraded and an input/output power drops.

For the electrolytic salt, lithium salt such as LiPF₆ is used, for example. Considering the electrolytic solution viscosity, the concentration of the electrolytic salt is preferably equal to or greater than 0.7 mol/L and equal to or less than 1.5 mol/L. The amount of nonaqueous electrolytic solution is preferably equal to or greater than 20 g and equal to or less than 150 g and more preferably equal to or greater than 25 g and equal to or less than 75 g. Much more preferably, the amount of nonaqueous electrolytic solution is equal to or greater than 30 g and equal to or less than 50 g, considering the nonaqueous electrolytic solution filling a gap inside the wound body of the positive and negative electrode plates and the separator or a gap formed between adjacent layers of the positive and negative electrode plates and the separator in a case where the body with the wound electrodes and the battery case have the above-described dimensions. In a case where the amount of nonaqueous electrolytic solution is less than 20 g, there is a probability that the electrolytic solution in the electrode body is easily depleted upon charging and discharging. On the other hand, in a case where the amount of nonaqueous electrolytic solution is greater than 150 g, there is a probability that a remaining space in the battery case decreases and the internal pressure of the battery increases due to gas generated by decomposition of the electrolytic solution.

### (Production of Battery Pack)

The produced rectangular secondary battery 10 was covered with an insulating film, and the spacers configured as shown in FIGS. 4A to 4C were bonded to the long side surfaces 20a of the battery case 20 through the insulating film. The rectangular secondary batteries 10 with the spacers were alternately arranged. In this manner, the battery pack 1 was produced. The rectangular secondary batteries 10 were arranged in such a direction that the positive electrode terminals 14 and the negative electrode terminals 15 are alternately arranged, the positive electrode terminal 14 and the negative electrode terminal 15 of adjacent ones of the rectangular secondary batteries were connected to each other through a bus bar, and the plurality of rectangular secondary batteries was electrically connected in series. The width of each of the pressing portions 30, 31, 32 forming the spacers was 10 mm, and the thickness of such a pressing portion was 0.3 mm.

The thickness of the spacer is preferably equal to or greater than 0.1 mm. If the thickness is less than 0.1 mm, the electrode body cannot be pressed as intended. On the other hand, the spacer thickness is preferably equal to or less than 3.0 mm, considering improvement in the efficiency of loading on a vehicle by a decrease in the total length of the battery pack.

### (Cycle Test)

A cycle of performing charging at 50 A from 60% to 80% of an initial battery capacity at a battery temperature of 25°C and subsequently performing discharging from 80% to 60% of the battery capacity was repeated 300 times without stop.

For the rectangular secondary battery after the cycle test, a resistance value after a lapse of 10 seconds after discharging of the rectangular secondary battery at 240 A from 50% of the battery capacity was measured, and a resistance increase rate with respect to an initial resistance value was obtained.

Table 1 shows results. It was assumed that a resistance increase rate in a case where the pair of first pressing portions 30 shown in FIG. 4A is used as the spacers is 100.

As shown in Table 1, in a case where the third pressing portion 32 is, as shown in FIG. 4B, used as the spacer in addition to the pair of first pressing portions 30, the resistance increase rate increased to 100.9 as compared to the case of using only the pair of first pressing portions 30.

On the other hand, in a case where the second pressing portion 31 is, as shown in FIG. 4C, used as the spacer in addition to the pair of first pressing portions 30, the resistance increase rate decreased to 87.3 as compared to the case of using only the pair of first pressing portions 30.

**[Table 1]**

| Spacer | Resistance Increase Rate |
|---|---|
| Only First Pressing Portions | 100 |
| First Pressing Portions and Third Pressing Portion | 100.9 |
| First Pressing Portions and Second Pressing Portion | 87.3 |

It is assumed that these results are because of the following reasons.

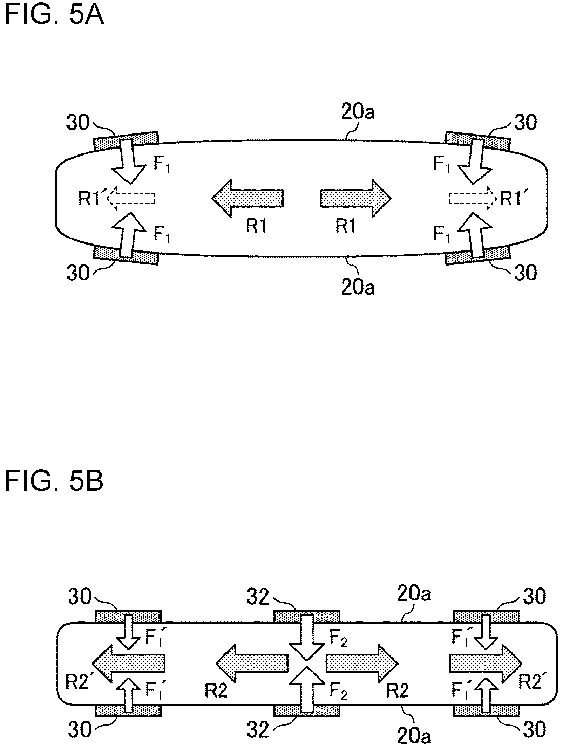

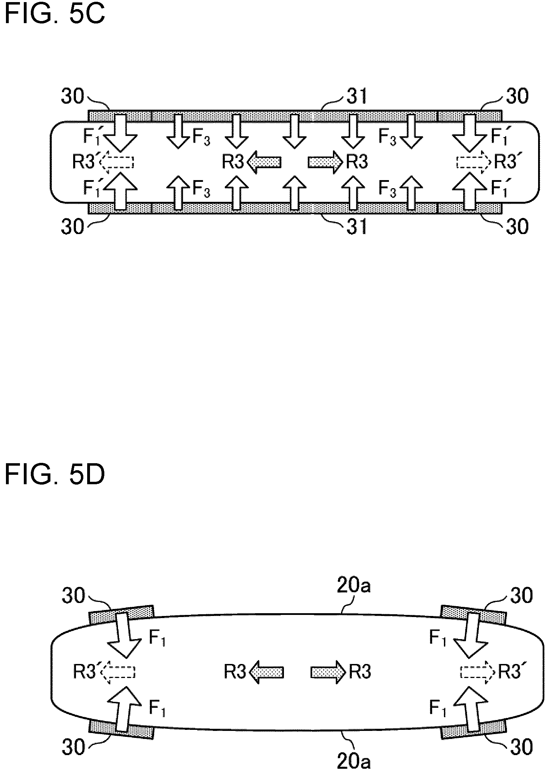

FIGS. 5A to 5C show sectional views along the winding axis J in a state in which the long side surface 20a of the battery case 20 is pressed by the spacers shown in FIGS. 4A to 4C. Moreover, FIG. 5D is a sectional view along a Vd-Vd line shifted from the winding axis J in FIG. 4C.

As shown in FIG. 5A, both end portions of each long side surface 20a of the battery case 20 are pressed by the pair of first pressing portions 30 so that the amount R1' of leakage of the electrolytic solution to the outside of the electrode body 11 due to charging and discharging can be reduced. However, the center portion of the electrode body 11 at which expansion and contraction are great is not pressed, and for this reason, the amount of expansion and contraction of the electrode body 11 due to high-rate charging and discharging is great and the amount R1 of electrolytic solution moving in the electrode body is great. Thus, the amount R1' of leakage of the electrolytic solution to the outside of the electrode body cannot be sufficiently reduced. As a result, the electrolytic solution leaks to the outside of the electrode body 11, and the electrolytic solution is depleted in the electrode body 11. Thus, degradation of the high-rate properties cannot be sufficiently reduced only by the pair of first pressing portions 30.

As shown in FIG. 5B, the third pressing portion 32 pressing the portion of the long side surface 20a of the battery case 20 along the direction perpendicular to the winding axis J is added to the middle between the pair of first pressing portions 30 in addition to the pair of first pressing portions 30, and therefore, expansion and contraction of the electrode body 11 at the center portion thereof can be reduced and the movement amount R2 of the electrolytic solution in the electrode body can be reduced (R1 > R2).

However, expansion and contraction of the electrode body are the greatest on the winding axis, and for this reason, the third pressing portion 32 pressing only the portion along the direction perpendicular to the winding axis J cannot sufficiently produce an effect of reducing expansion and contraction of the electrode body 11 and therefore an effect of reducing the movement amount R2 of the electrolytic solution.

When the center portion of the electrode body is pressed with pressing force F₃ along the direction perpendicular to the winding axis J, the electrode body 11 is pushed out at both end portions of the electrode body 11 by elasticity of the electrode body 11. Thus, at both end portions of the electrode body 11, pressing force F₁' of the pair of first pressing portions 30 is smaller than pressing force F₁ of the pair of first pressing portions 30 shown in FIG. 5A. That is, an effect of reducing leakage of the electrolytic solution to the outside of the electrode body 11 by the pair of first pressing portions 30 is reduced due to addition of the third pressing portion 32. As a result, the amount R2' of outflow of the electrolytic solution to the outside of the electrode body increases, and the electrolytic solution is depleted in the electrode body 11 (R2' > R1').

As a result, in a case where the third pressing portion 32 is used in addition to the pair of first pressing portions 30 as shown in FIG. 4B, the resistance increase rate increases as compared to the case of using only the pair of first pressing portions 30.

On the other hand, the second pressing portion 31 pressing the portion of the long side surface 20a of the battery case 20 along the winding axis J is added to between the pair of first pressing portions 30 in addition to the pair of first pressing portions 30, and therefore, expansion and contraction of the electrode body 11 at the center portion thereof can be reduced as in the case shown in FIG. 5B. That is, the portion, at which expansion and contraction are the greatest, of the electrode body 11 on the winding axis J is pressed by the second pressing portion 31, and therefore, the effect of reducing expansion and contraction is great, and the movement amount R3 of the electrolytic solution can be effectively reduced (R1 > R2 > R3).

By pressing by the second pressing portion 31 on the winding axis J, the pressing force F₁' of the pair of first pressing portions 30 is, as in FIG. 5B, smaller than the pressing force F₁ of the pair of first pressing portions 30 shown in FIG. 5A at both end portions of the electrode body 11. As shown in FIG. 5D, no pressing portion interfering with the pressing force F₁ of the first pressing portions 30 is present at a portion other than the portion on the winding axis J. Thus, the electrode body 11 is not pushed out at both end portions of the electrode body 11. Accordingly, the pressing force F₁ of the pair of first pressing portions 30 shown in FIG. 5A does not decrease, and therefore, the effect of reducing leakage of the electrolytic solution to the outside of the electrode body 11 by the pair of first pressing portions 30 can be maintained and the amount R3' of outflow of the electrolytic solution to the outside of the electrode body can be reduced (R2' > R1' > R3').

With the above-described two effects, the movement amount R3 of the electrolytic solution can be effectively reduced while the amount R3' of outflow of the electrolytic solution to the outside of the electrode body is effectively reduced, and therefore, depletion of the electrolytic solution in the electrode body 11 can be reduced in high-rate charging and discharging. As a result, in the case of using the second pressing portion 31 in addition to the pair of first pressing portions 30 as shown in FIG. 4C, the resistance increase rate decreases as compared to the case of using only the pair of first pressing portions 30.

As described above, in the battery pack 1 configured such that the plurality of rectangular secondary batteries 10 is arranged in the state in which the rectangular secondary batteries 10 are pressed against each other in the arrangement direction through the spacers, the spacers include the pair of first pressing portions 30 pressing both end portions of the long side surface 20a, which faces the flat portion 11a of the electrode body 11, of the battery case 20 in the winding axis J direction along the direction perpendicular to the winding axis J and the second pressing portion 31 pressing the portion along the winding axis J between the pair of first pressing portions 30. With this configuration, degradation of the high-rate properties can be reduced.

As compared to the case of pressing both end portions of the electrode body 11 only in the direction perpendicular to the winding axis only by the pair of first pressing portions 30, an electrode body movement amount upon dropping of the battery pack can be reduced because of addition of the second pressing portion 31 pressing the portion along the winding axis J. Thus, battery pack resistance to dropping can be also improved.

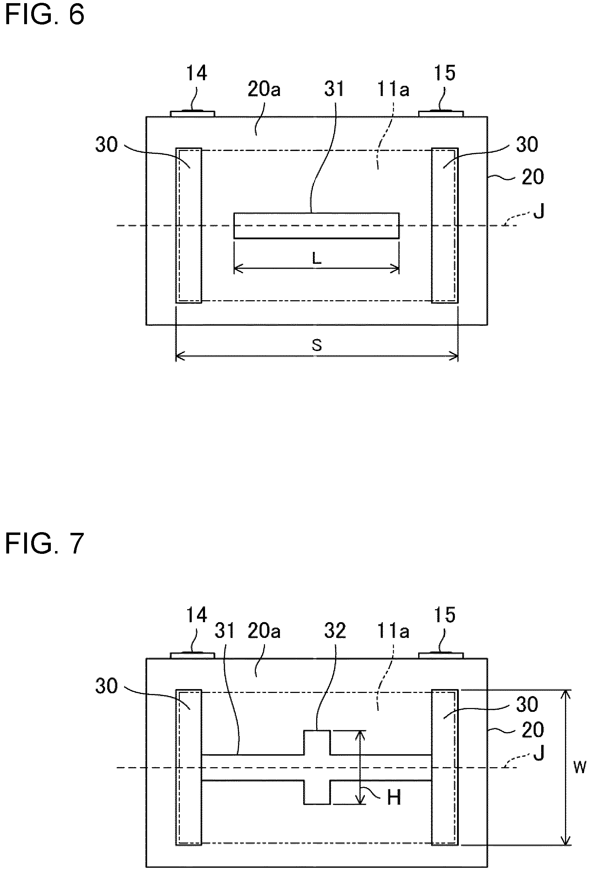

As shown in FIG. 4C, the spacers in the present embodiment, i.e., the pair of first pressing portions 30 and the second pressing portion 31, form an H-shaped pressing portion. However, as shown in FIG. 6, the second pressing portion 31 does not necessarily contact the pair of first pressing portions 30.

Assuming that the length of the second pressing portion 31 in the winding axis J direction is L and a length between the pair of first pressing portions 30 is S as shown in FIG. 6, battery packs were produced using spacers whose L/S is 1, 2/3, 1/2, and 1/3, and a cycle test similar to that described above was conducted to evaluate the high-rate properties. The spacers satisfying L/S = 1 as described herein form the H-shaped pressing portion.

Table 2 shows results.

**[Table 2]**

| L/S | Resistance Increase Rate |
|---|---|
| 1 | 87.3 |
| 2/3 | 90.4 |
| 1/2 | 95.4 |
| 1/3 | 99.3 |

As shown in Table 2, in the case of using the spacers formed such that the length L of the second pressing portion 31 satisfies L/S ≥ 1/2, the resistance increase rate decreased. On the other hand, in the case of using the spacers satisfying L/S = 1/3, the resistance increase rate did not decrease much. It was assumed that this is because when the length L of the second pressing portion 31 is too short, the effect of reducing expansion and contraction at the center portion of the electrode body 11 cannot be sufficiently produced. Thus, for producing an effect of reducing degradation of the high-rate properties, the spacers satisfying L/S ≥ 1/2 are preferably used.

The spacers in the present embodiment may further include, as shown in FIG. 7, the third pressing portion 32 pressing the portion along the direction perpendicular to the winding axis J in the middle between the pair of first pressing portions 30 in addition to the pair of first pressing portions 30 and the second pressing portion 31.

Assuming that the length of the third pressing portion 32 in the direction perpendicular to the winding axis J is H and the length of the pair of first pressing portions 30 in the direction perpendicular to the winding axis J is W as shown in FIG. 7, battery packs were produced using spacers whose H/W is 1/3, 1/2, 1/3, and 1, and a cycle test similar to that described above was conducted to evaluate the high-rate properties.

Table 3 shows results.

**[Table 3]**

| H/W | Resistance Increase Rate |
|---|---|
| 1/3 | 91.2 |
| 1/2 | 94.9 |
| 2/3 | 99.6 |
| 1 | 100.8 |

As shown in Table 3, in the case of using the spacers formed such that the length H of the third pressing portion 32 satisfies H/W ≤ 1/2, the resistance increase rate decreased. On the other hand, in the case of using the spacers satisfying H/W ≥ 2/3, the resistance increase rate did not decrease much or slightly increased. It was assumed that this is because when the length H of the third pressing portion 32 is too long, the effect of reducing leakage of the electrolytic solution to the outside of the electrode body 11 by the pair of first pressing portions 30 is reduced as in the spacers shown in FIG. 4B. Thus, for producing the effect of reducing degradation of the high-rate properties, the spacers satisfying H/W ≤ 1/2 are preferably used.

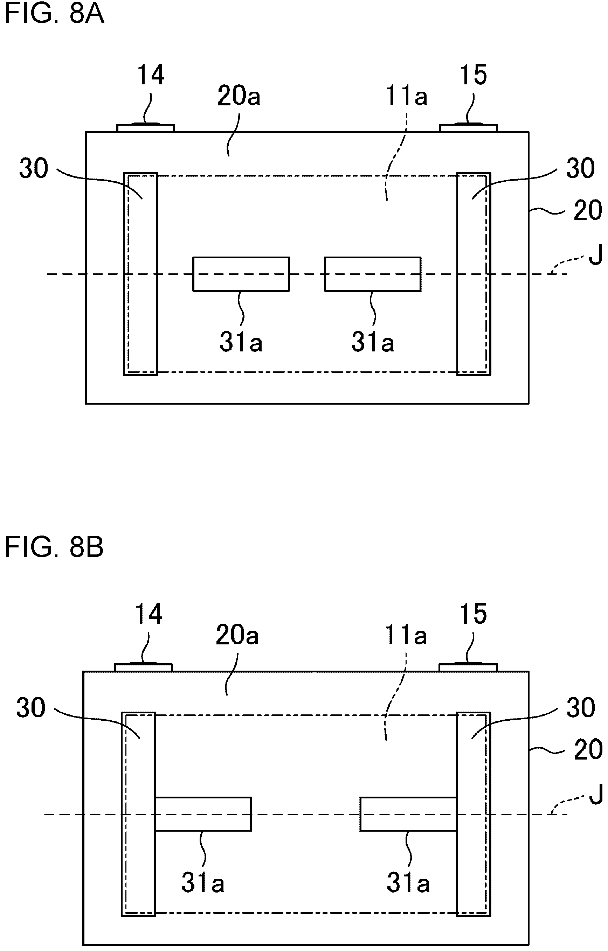

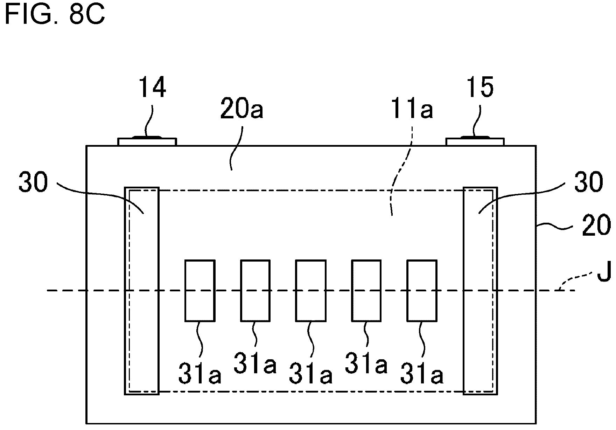

The present invention has been described above with reference to the preferable embodiment, but such description is not limitative and various modifications can be made, needless to say. For example, the second pressing portion 31 may have, as shown in FIGS. 8A to 8C, a plurality of divided regions 31a. Assuming that the total length of the plurality of regions 31a in the direction along the winding axis J is L, L/S ≥ 1/2 (S is the length between the pair of first pressing portions 30) may only be required to be satisfied. Refrigerant (air or water) flows in a space between the formed spacers so that a battery cooling effect can be enhanced.

In the present embodiment, the material of each of the pressing portions 30, 31, 32 forming the spacers is not particularly limited. Examples of the material of each of the pressing portions 30, 31, 32 may include resin such as polypropylene, polystyrene, and polycarbonate and metal such as aluminum alloy and stainless steel.

In the present embodiment, a method of bonding each of the pressing portions 30, 31, 32 to the long side surface 20a of the battery case 20 is not particularly limited. For example, each of the pressing portions 30, 31, 32 may be directly bonded to the long side surface 20a of the battery case 20. Alternatively, for ensuring insulation between the rectangular secondary batteries 10, the rectangular secondary battery 10 may be covered with the insulating film, and thereafter, each of the pressing portions 30, 31, 32 may be bonded to the long side surface 20a of the battery case 20 through the insulating film. Alternatively, protrusions having the shapes of the spacers may be provided on a flat base portion to form each of the pressing portions 30, 31, 32, and the base portion with each of the pressing portions 30, 31, 32 may be inserted into between the rectangular secondary batteries 10. Each of the pressing portions 30, 31, 32 is bonded to the long side surface 20a of the battery case 20 through the insulating film so that the insulation between the batteries can be ensured while the total length of the battery pack is shortened as compared to the case of interposing the base portion. Thus, the efficiency of loading on the vehicle can be improved.

In the case of covering the battery case with the insulating film, the thickness of the insulating film, the thickness of the insulating film is preferably equal to or less than 0.15 mm. In the case of greater than 0.15 mm, the force of the spacer pressing the body with the wound electrodes decreases due to elasticity of the insulating film, and for this reason, the electrode body cannot be pressed as intended.

In the above-described embodiment, the second pressing portion 31 is provided along the winding axis J, but may be provided at a position shifted from the winding axis J within a scope in which the advantageous effects of the present disclosure are not degraded.

In the above-described embodiment, each of the pressing portions 30, 31, 32 is preferably in a linear shape, but may be in an optional shape within the scope in which the advantageous effects of the present disclosure are not degraded.

### DESCRIPTION OF REFERENCE CHARACTERS

- 1: Battery Pack
- 10: Rectangular Secondary Battery
- 11: Electrode Body
- 11a: Flat Portion
- 11b: Curved Portion
- 12, 13: Ends of Positive and Negative Electrode Plates
- 14: Positive Electrode Terminal
- 15: Negative Electrode Terminal
- 16, 17: Current Collector
- 20: Battery Case
- 20a: Long Side Surface
- 21: Sealing Plate
- 30: Pair of First Pressing Portions
- 31: Second Pressing Portion
- 32: Third Pressing Portion

## Claims

1. A battery pack (1) comprising:
a plurality of rectangular secondary batteries (10) arranged in a state in which the plurality of rectangular secondary batteries (10) is pressed against each other in a thickness direction through a spacer,
wherein each rectangular secondary battery (10) is configured such that a flat electrode body (11) including positive and negative electrode plates wound with a separator interposed therebetween is housed in a rectangular battery case (20) with a winding axis (J) of the electrode body (11) extending parallel with a long side surface (20a) of the battery case (20),
the electrode body (11) has a flat portion (11a) in which a positive electrode material mixture layer and a negative electrode material mixture layer face each other with the separator interposed therebetween, and
the spacer includes
a pair of first pressing portions (30) pressing both end portions of the long side surface (20a), which faces the flat portion (11a), of the battery case (20) in a winding axis (J) direction along a direction perpendicular to the winding axis (J), and
a second pressing portion (31) pressing a portion of the long side surface (20a) along the winding axis (J) between the pair of first pressing portions (30),
wherein the spacer further includes a third pressing portion (32) pressing a portion of the long side surface (20a), which faces the flat portion (11a), of the battery case (20) along the direction perpendicular to the winding axis (J) in a middle between the pair of first pressing portions (30), and
when a length of the third pressing portion (32) in the direction perpendicular to the winding axis (J) is H and a length between the pair of first pressing portions (30) in the direction perpendicular to the winding axis (J) is W, H/W ≤ 1/2 is satisfied.

2. The battery pack (1) of claim 1, wherein
when a length of the second pressing portion (31) in the winding axis (J) direction is L and a length between the pair of first pressing portions (30) is S, L/S ≥ 1/2 is satisfied.

3. The battery pack (1) of claim 2, wherein
the second pressing portion (31) has a plurality of divided regions, and the length L of the second pressing portion (31) in the winding axis (J) direction is a total length of the plurality of regions.

4. The battery pack (1) of claim 1, wherein
the pair of first pressing portions (30) and the second pressing portion (31) form an H-shaped pressing portion.

## Patentansprüche

1. Batteriepack (1), umfassend:
eine Vielzahl rechtwinkliger Sekundärbatterien (10), die in einem Zustand angeordnet sind, in dem die Vielzahl von rechtwinkligen Sekundärbatterien (10) in einer Dickenrichtung durch einen Abstandshalter gegeneinander gedrückt werden,
wobei jede rechtwinklige Sekundärbatterie (10) derart ausgestaltet ist, dass ein flacher Elektrodenkörper (11), der Positiv- und Negativelektrodenplatten umfasst, die mit einem dazwischen angeordneten Separator gewickelt sind, in einem rechtwinkligen Batteriegehäuse (20) untergebracht ist, wobei eine Wicklungsachse (J) des Elektrodenkörpers (11) sich parallel zu einer Oberfläche (20a) einer langen Seite des Batteriegehäuses (20) erstreckt,
der Elektrodenkörper (11) einen flachen Abschnitt (11a) aufweist, in dem eine Positivelektrodenmaterial-Gemischschicht und eine Negativelektrodenmaterial-Gemischschicht einander mit dem dazwischen angeordneten Separator zugewandt sind, und
der Abstandshalter umfasst
ein Paar erste Drückabschnitte (30), die beide Endabschnitte der Oberfläche (20a) der langen Seite des Batteriegehäuses (20), die dem flachen Abschnitt (11) zugewandt ist, in einer Richtung einer Wicklungsachse (J) entlang einer Richtung senkrecht zur Wicklungsachse (J) drücken, und
einen zweiten Drückabschnitt (31), der einen Abschnitt der Oberfläche (20a) der langen Seite entlang der Wicklungsachse (J) zwischen dem Paar erste Drückabschnitte (30) drückt,
wobei der Abstandshalter ferner einen dritten Drückabschnitt (32) umfasst, der einen Abschnitt der Oberfläche (20a) der langen Seite des Batteriegehäuses (20), die dem flachen Abschnitt (11) zugewandt ist, entlang der Richtung senkrecht zur Wicklungsachse (J) in einer Mitte zwischen dem Paar erste Drückabschnitte (30) drückt, und
wenn eine Länge des dritten Drückabschnitts (32) in der Richtung senkrecht zur Wicklungsachse (J) H ist und eine Länge zwischen dem Paar erste Drückabschnitte (30) in der Richtung senkrecht zur Wicklungsachse (J) W ist, H/W ≤ 1/2 erfüllt ist.

2. Batteriepack (1) nach Anspruch 1, wobei
wenn eine Länge des zweiten Drückabschnitts (31) in der Richtung der Wicklungsachse (J) L ist und eine Länge zwischen dem Paar erste Drückabschnitte (30) S ist, L/S ≥ 1/2 erfüllt ist.

3. Batteriepack (1) nach Anspruch 2, wobei
der zweite Drückabschnitt (31) eine Vielzahl von geteilten Regionen aufweist und die Länge L des zweiten Drückabschnitts (31) in der Richtung der Wicklungsachse (J) eine Gesamtlänge der Vielzahl von Regionen ist.

4. Batteriepack (1) nach Anspruch 1, wobei
das Paar erste Drückabschnitte (30) und der zweite Drückabschnitt (31) einen H-förmigen Drückabschnitt bilden.

## Revendications

1. Bloc-batterie (1) comprenant :
une pluralité de batteries rechargeables rectangulaires (10) agencées dans un état dans lequel la pluralité de batteries rechargeables rectangulaires (10) sont comprimées les unes contre les autres dans une direction d'épaisseur par le biais d'un dispositif d'espacement,
dans lequel chaque batterie rechargeable rectangulaire (10) est configurée de sorte qu'un corps d'électrode plat (11) comprenant des électrodes planes positive et négative enroulées avec un séparateur intercalé entre elles est logé dans un boîtier de batterie rectangulaire (20) avec un axe d'enroulement (J) du corps d'électrode (11) qui s'étend parallèlement à une surface du côté long (20a) du boîtier de batterie (20),
le corps d'électrode (11) a une partie plate (11a) dans laquelle une couche de mélange de matériau d'électrode positive et une couche de mélange de matériau d'électrode négative se font face avec le séparateur intercalés entre elles, et
le dispositif d'espacement comprend :
une paire de premières parties de pression (30) comprimant deux parties d'extrémité de la surface du côté long (20a), qui fait face à la partie plate (11a), du boîtier de batterie (20) dans une direction d'axe d'enroulement (J) le long d'une direction perpendiculaire à l'axe d'enroulement (J), et
une deuxième partie de pression (31) comprimant une partie de la surface du côté long (20a) le long de l'axe d'enroulement (J) entre la paire de premières parties de pression (30),
dans lequel le dispositif d'espacement comprend en outre une troisième partie de pression (32) comprimant une partie de la surface du côté long (20a), qui fait face à la partie plate (11a), du boîtier de batterie (20) le long de la direction perpendiculaire à l'axe d'enroulement (J) dans un centre entre la paire de premières parties de pression (30), et
lorsqu'une longueur de la troisième partie de pression (32) dans la direction perpendiculaire à l'axe d'enroulement (J) est H et qu'une longueur entre la paire de premières parties de pression (30) dans la direction perpendiculaire à l'axe d'enroulement (J) est W, H/W ≤ ½ est satisfait.

2. Bloc-batterie (1) selon la revendication 1, dans lequel :
lorsqu'une longueur de la deuxième partie de pression (31) dans la direction d'axe d'enroulement (J) est L et qu'une longueur entre la paire de premières parties de pression (30) est S, L/S ≥ ½ est satisfait.

3. Bloc-batterie (1) selon la revendication 2, dans lequel :
la deuxième partie de pression (31) a une pluralité de régions divisées, et la longueur L de la deuxième partie de pression (31) dans la direction d'axe d'enroulement (J) est une longueur totale de la pluralité de régions.

4. Bloc-batterie (1) selon la revendication 1, dans lequel :
la paire de premières parties de pression (30) et la deuxième partie de pression (31) forment une partie de pression en forme de H.
